# EUROPEAN PATENT APPLICATION

(11) **EP 1 819 071 A1**
(43) Date of publication of application: **15.08.2007**
(21) Application number: 06290264.8
(22) Date of filing: 14.02.2006
(51) Int. Cl.: H04B 10/18

(54) **Method of delaying an optical signal and optical routing device**

(71) Applicant: Alcatel Lucent, 75008 Paris (FR)
(72) Inventor: Charlet, Gabriel, 91190 Villiers-Le-Bacle (FR); Lefrançois, Mathieu, 91140 Villebon sur Yvette (FR)
(74) Representative: Kohler Schmid Möbus

(57) **Abstract**

An optical delay line (4) comprises a wavelength-tuneable laser (6) and a span of optical fibre (8) connected with said laser (6), said fibre (8) having a predetermined amount of chromatic dispersion. The proposed optical delay line (4) further comprises a phase response unit providing a periodic group delay, e.g. a Gires-Tournois (GT) interferometer (7) functioning as a Gires-Tournois Dispersion Compensation Module (GT-DCM), which is connected with said fibre span (8) and adapted to compensate at least part of the chromatic dispersion introduced by the optical fibre (8) without cancelling a group delay introduced by the optical fibre (8) i.e. the intra channel group delay remains constant but differs for each channel. In this way, an optical delay line with increased dynamic range can be devised, which does not suffer from signal distortion due to accumulated chromatic dispersion of the delay line.

## Description

### Background of the invention

The present invention relates to a method of delaying an optical signal, wherein light emitted by a wavelength-tuneable laser is transmitted on a fibre link having a predetermined amount of chromatic dispersion.

The present invention also relates to an optical delay line comprising a wavelength-tuneable laser and a span of optical fibre connected with said laser, said fibre having a predetermined amount of chromatic dispersion.

Furthermore, the present invention relates to an optical routing device comprising an optical switch.

Optical delay lines of the above-mentioned type are required for applications such as optical routers operating at data rates of, for instance, 10 or 40 Gbit/s, wherein an optical switching means is used to route data contents, e.g. in the form of data packets, in accordance with a time delay introduced by the chromatic dispersion effect of the optical fibre link. A desired characteristic of such optical delay lines is a large dynamic, preferably of several hundreds of picoseconds (ps). In this context, a common approach for to devise an optical delay line consists of employing moving mechanical parts, such as chirped mirrors, for generating said time delay. However, prior art solutions of this kind entail problems commonly encountered in connection with a use of rapidly moving mechanical parts.

An alternative solution known from the prior art consists of using a wavelength-tuneable laser connected with a spool of fibre having a certain amount of chromatic dispersion. The data to be delayed is encoded on the laser wavelength, for instance, by means of an external modulator. Owing to the chromatic dispersion of the fibre material, a variation of wavelengths of the laser translates into a time delay since different wavelengths experience different amounts of chromatic dispersion. However, this approach suffers from the disadvantage that large values of chromatic dispersion, which are used to obtain long delay times, and / or wide signal bandwidths lead to an unacceptable amount of distortion of a transmitted optical signal due to the effect of accumulated chromatic dispersion of the delay line.

### Object of the invention

It is the object of the present invention to provide a method of delaying an optical signal as well as an optical delay line and an optical routing device, which do not suffer from the above-mentioned disadvantages such that large values of time delay are achievable with reduced signal distortion.

### Description of the invention

In accordance with a first aspect of the present invention, the object is achieved by providing a method of the above-mentioned type, wherein at least part of the chromatic dispersion introduced by the fibre is compensated by means of a phase response unit adapated to compensate at least part of the chromatic dispersion without cancelling a group delay introduced by said fibre dispersion.

In accordance with a second aspect of the present invention, in the case of an optical delay line of the above-mentioned type the object is achieved by providing said optical delay line with a phase response unit connected with said fibre span and adapted to compensate at least part of the chromatic dispersion introduced by the optical fibre without cancelling a group delay introduced by said fibre dispersion.

Furthermore, in accordance with a third aspect of the present invention the object is achieved by providing an optical routing device of the above-mentioned type which further comprises an optical delay line according to said second aspect of the present invention in operative connection with the optical switch.

Thus, the basic idea of the present invention consists in compensating chromatic dispersion of the optical fibre used for delaying optical signals by means of a specific phase response unit functioning as a Dispersion Compensation Module (DCM) and adapated to at least partly compensate the chromatic dispersion without cancelling a group delay introduced by said fibre dispersion.

In accordance with an embodiment of the present invention, said phase response unit may be comprise at least one Gires-Tournois interferometer. As known to a person skilled in the art, a Gires-Tournois interferometer basically is an optical standing-wave cavity designed to create chromatic dispersion. Contrary to Dispersion Compensating Fibre (DCF) commonly used in optical transmission systems a Gires-Tournois DCM (GT-DCM) will not annihilate the delay generated by chromatic fibre dispersion, but will only cancel the presumably negative distortion effects generated together with the desired time delay within a given periodic spectral band.

Alternatively, in other embodiments of the delay line accordance with the present invention the phase response unit may be devised in the form of one of a Virtually Imaged Phased Array (VIPA), a ring resonator, and a fibre Bragg grating (FBG) or in the form of any other Dispersion Compensation Module adapated to compensate chromatic dispersion within separate (periodic) spectral bands without cancelling a group delay introduced by fibre dispersion.

In a further embodiment of the optical delay line in accordance with the present invention, the tuneable laser is further connected with an encoding means, e.g. an external modulator, adapted to encode data to be delayed on the laser wavelength.

In yet another embodiment of the optical delay line in accordance with the present invention, the optical fibre has a first constant dispersion value for to induce a linear group delay. In this way, negative effects of dispersion introduced by the optical fibre can be easily compensated by means of the proposed use of a phase response unit , e.g. at least one Gires-Tournois interferometer.

In yet a further embodiment of the optical delay line in accordance with the present invention, the phase response unit is adapted to induce a wavelength-dependent dispersion having wavelength regions of a second dispersion value essentially complementary to a dispersion value of the optical fibre. In this way, the phase response unit completely compensates the dispersion effects within said wavelengths regions, hereinafter also referred to as "bandwidths", without cancelling the time delay effect induced by optical fibre dispersion. In other words: the phase response unit is adapted to compensate the chromatic dispersion introduced by the optical fibre within separate, preferably periodic, spectral bands.

Advantageously and in accordance with a preferred embodiment of the optical delay line in accordance with the present invention, a group delay generated by a combined action of the optical fibre and the phase response unit is a stair-like function of the optical wavelength and presents a succession of regions with essentially constant respective group delay, which are separated by respective transition regions of steeply increasing group delay. In other words: In accordance with the present invention the time delay induced on the transmitted optical signals is a constant value for respective bandwidths, at the wavelengths limits of which a steep transition (step) occurs with respect to an adjacent bandwidth. In this way, the tuneable laser can be tuned to optical wavelengths comprised within a given bandwidth for to transmit data which will share a common delay time when arriving at an optical switching means of a routing device comprising the inventive delay line. Tuning the laser to wavelengths comprised within a different bandwidth will result in a time delay which differs by at least said step value from the time delay of other bandwidth wavelengths, as mentioned farther up.

In this way, the present invention provides an optical delay line having a large dynamic without relying on moving mechanical parts and without suffering from the negative effects of signal distortion.

Further advantages and characteristics of the present invention can be gathered from the following description of preferred embodiments given by way of example only with reference to the enclosed drawings. Features mentioned above as well as below can be used in accordance with the invention either individually nor in conjunction. The embodiments mentioned are not be understood as an exhaustive enumeration but rather as examples with regard to the underlying concept of the present invention.

Drawings
- Fig. 1: is a schematic block diagram of an optical routing device in accordance with the present invention;
- Fig. 2: is a schematic diagram illustrating the principle of operation of the method in accordance with the present invention; and
- Fig. 3: is a diagram showing experimental measurement results in connection with an operation of the optical delay line in accordance with the present invention.

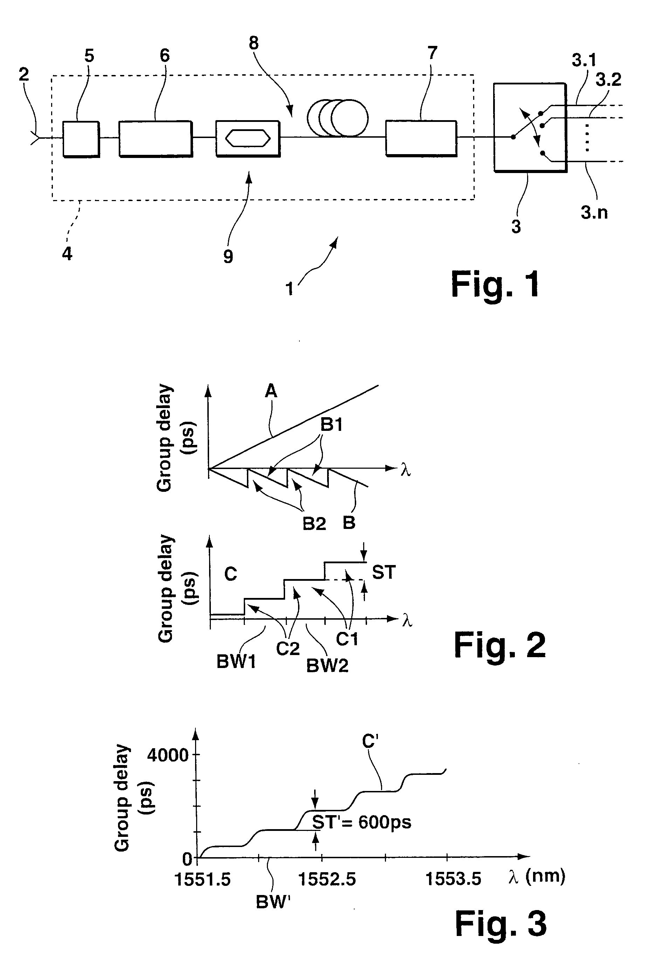

**Fig. 1** shows a schematic block diagram of an optical routing device **1** in accordance with an aspect of the present invention. The optical routing device **1** generally comprises a data input **2** and a branching unit devised as an optical switch **3** having a plurality of switchable outputs **3.1, 3.2,..., 3.n,** which are operatively connected by means of an optical delay line **4** generally represented in Fig. 1 by means of a dashed box. The optical delay line 4 comprises a modulator **5** connected with a wavelength-tuneable laser **6.** In the examplary embodiment shown, the optical delay line 4 further comprises a phase response unit devised as a Gires-Tournois (GT) interferometer **7** and functioning as a Dispersion Compensation Module (DCM), an output of which is connected with optical switch 3. The tuneable laser 6 and the Gires-Tournois Dispersion Compensation Module (GT-DCM) are interconnected by means of a span of optical fibre **8.** The optical fibre 8 is devised as a fibre having a predetermined amount of chromatic dispersion in terms of a first dispersion value. Preferably, the optical fibre 8 has a constant dispersion value. The GT interferometer 7 preferably is adapted to induce a wavelength-dependent dispersion having wavelength regions of a dispersion value essentially complementary to said dispersion value of the optical fibre 8.

Gires-Toumois interferometers, such as interferometer 7 of Fig. 1, as such are known to a person skilled in the art. A Gires-Tournois interferometer is an optical standing-wave cavity designed to generate chromatic dispersion and generally comprises a partially reflective front mirror combined with a back mirror of high reflectivity. A phase of the light reflected from the cavity is frequency-dependent due to the cavity effect causing group delay dispersion (GDD). The phase change of reflective light and the group delay dispersion as well as higher-order dispersion change periodically with optical frequency-wavelength, if material dispersion is negligible. The induced group delay dispersion as function of wavelength presents a saw-tooth like behaviour with no dispersion exactly on resonance or anti-resonance, and positive or negative dispersion between these points. However, as already indicated above, in other embodiments of the delay line accordance with the present invention the phase response unit may take the form of one of a Virtually Imaged Phased Array (VIPA), a ring resonator, and a fibre Bragg grating (FBG) or any other Dispersion Compensation Module adapated to at least partly compensate chromatic dispersion without cancelling a group delay introduced by optical fibre 8 - preferably within separate (periodic) spectral bands.

In practise, a cascade (not shown) of phase response units, such as GT interferometer 7, are required to generate the desired function. Typically, a number of four to six cascaded GT interferometers 7 - not a single one as show here merely for reason of clarity - are used to compensate for the chromatic dispersion of the optical fibre 8.

During operation of the optical routing device 1 in accordance with an aspect of the present invention, data to be transmitted / routed is provided at data input 2. Modulator 5 is used to encode the data on the laser wavelength of the tuneable laser 6, i.e., a specific data contents is encoded by modulating a particular associated laser wavelength to which the tuneable laser 6 has been tuned accordingly. The wavelength-encoded data **9** is then transmitted on the optical fibre 8 towards the GT interferometer 7 and the optical switch 3. For routing the data 9 by means of the optical switch 3, said data has to be selectively delayed depending on the tuned laser wavelength on which a specific data contents has been encoded. In accordance with the present invention, optical fibre 8 provides linear group delay of the data 9. In this way, owing to the constant dispersion value of the optical fibre 8 the group delay of data 9 increases linearly with the laser wavelength while the data 9 is being transmitted on the optical fibre 8. At a same time, however, if large chromatic dispersion values are used for the optical fibre 8 and / or if a bandwidth of the transmitted data signal 9 is too wide, the data signal is distorted due the accumulated chromatic dispersion effect of the optical fibre 8. Therefore, in accordance with the present invention, chromatic dispersion of the optical fibre 8 is partly compensated within regions of reduced bandwidth by the GT interferometer 7 without annihilating the desired delay effect introduced by the optical fibre 8, as will now be explained in further detail with reference to appended Figs. 2 and 3.

**Fig. 2** shows the group delay introduced on the transmitted data 9 (Fig. 1) by means of the optical fibre 8 and the GT interferometer 7, respectively, as a function of the optical wavelength λ. Since optical fibre 8 has a constant dispersion value, e.g. comprising values of 1000 ps/nm or 2000 ps/nm, the group delay increases linearly with laser wavelength. In the present Fig. 2 this is illustrated by means of a solid line A with constant slope in the upper diagram. The saw-tooth shaped line **B** depicted in the same diagram of Fig. 2 illustrates the group delay induced on the data signal 9 (Fig. 1) by the GT interferometer 7. Group delay curve B has regions **B1** illustrative of a group delay caused by a dispersion value of the GT interferometer 7 which is essentially complementary to the dispersion value of the optical fibre 8 (Fig. 1), as can be derived from the fact that group delay curve A associated with optical fibre 8 and group delay curve B associated with GT interferometer 7 in said regions B1, respectively, have complementary slopes, i.e., a slope of curve B in said regions B1 is equal to the absolute value of the slope of curve A, but of opposite sign. Between said regions B1 there are step-like transition regions **B2** with steeply increasing group delay induced by the GT interferometer 7.

The combined effect of optical fibre 8 and GT interferometer 7 on the group delay of transmitted data 9 is depicted in the lower diagram of Fig. 2. As can easily be derived from a summation of curves A, B in the upper diagram of Fig. 2, the resulting group delay curve **C** is a stair-like function of the optical wavelength λ presenting a succession of regions **C1** with essentially constant respective group delay separated by respective transition regions **C2** of steeply increasing group delay, wherein said regions C1 correspond to the above-described regions B1, and wherein said regions C2 correspond to the above-described regions B2. In this way, data signals comprised within respective periodic bandwidths **BW1, BW2**,... will have a common group delay and will be separated with respect to their group delay from data signals comprised in an adjacent bandwidth by a group delay step value **ST** depending on the group delay transition value induced by the GT interferometer 7 in said regions B2, said value being dependent on a dimension of the GT interferometer cavity, as known to a person skilled in the art. As already states above, a cascade of GT interferometers are typically required to generate the desired function and thus to compensate for the chromatic dispersion of fibre. In this way, adjacent / periodic bandwidths of optical data signals transmitted on optical delay line 4 will be spaced in time (delayed relative to one another) by a constant group delay time value corresponding to said step value ST of Fig. 2.

Referring back to Fig. 1, the inventive effect of data 9 arriving at equally spaced delay times can be used to easily route the data by means of optical switch 3, which routes the data to a predetermined output 3.1, 3.2,..., 3.n according to the delay time.

Optical delay lines as described above are required for optical routers operating at 10 or 40 Gbit/s and can also be used for military applications, such as RADAR. If one considers a chromatic dispersion of 1000 ps/nm for the optical fibre 8, which can, e.g., be obtained by using 50 km of standard single-mode optical fibre (SSMF), i.e. generating about 10 dB loss, and a tuneable laser which is wavelength-tuneable over a range of 40 nm, one obtains a delay line generating a delay of 40,000 ps (i.e., 40 ns), which amounts to 400 bit at 10 Gbit/s. Using lasers which are wavelength-tuneable over a wider range of, for instance, 80 nm and an optical fibre with a larger chromatic dispersion value of, for instance, 2000 ps/nm, a delay line introducing a group delay of 160 ns is feasible. Employing a standard GT-DCM / GT-interferometer having a usable compensation bandwidth of about 0.4 nm (cf. bandwidth of regions B1 in Fig. 2) and being designed for 50 GHz spacing in combination with a 1000 ps/nm optical fibre, an optical delay by steps of 400 ps can be generated according to the present invention.

**Fig. 3** shows experimental measurement results for the group delay measured in picoseconds (ps) as a function of optical wavelength λ in the spectral range from 1551.5 nm to 1553.5 nm. Again, the group delay curve **C'** (cf. Fig. 2) has an overall stair-like appearance with a step value **ST'** of approximately 600 ps and a bandwidth **BW'** of approximately 0,4 nm corresponding to a 50 GHz spacing of the GT-DCM / GT interferometer 7 (Fig. 1).

## Claims

1. A method of delaying an optical signal, wherein light emitted by a wavelength-tuneable laser (6) is transmitted on a fibre link (8) having a predetermined amount of chromatic dispersion, **characterised in that** at least part of the chromatic dispersion introduced by the fibre (8) is compensated by means of a phase response unit (7) adapated to compensate at least part of the chromatic dispersion without cancelling a group delay introduced by said fibre dispersion.

2. An optical delay line (4), comprising:
- a wavelength-tuneable laser (6), and
- a span of optical fibre (8) connected with said laser (6), said fibre (8) having a predetermined amount of chromatic dispersion,
**characterised by** a phase response unit (7) connected with said fibre span (8) and adapted to compensate at least part of the chromatic dispersion introduced by the optical fibre (8) without cancelling a group delay introduced by said fibre dispersion.

3. The optical delay line (4) of claim 2, wherein the phase response unit comprises at least one Gires-Tournois interferometer (7).

4. The optical delay line (4) of claim 2, wherein the phase response unit (7) comprises at least one of a Virtually Imaged Phased Array (VIPA), a ring resonator, and a fibre Bragg grating (FBG).

5. The optical delay line (4) of claim 2, wherein the laser (6) is connected with an encoding means (5) adapted to encode data (2, 9) to be delayed on the laser wavelength (λ).

6. The optical delay line (4) of claim 2, wherein the optical fibre (8) has a first dispersion value for to induce a linear group delay.

7. The optical delay line (4) of claim 2, wherein the phase response unit (7) is adapted to induce a wavelength-dependent dispersion having wavelength regions (B2) of a second dispersion value essentially complementary to a dispersion value of the optical fibre (8).

8. The optical delay line (4) of claim 2, wherein a group delay induced by the phase response unit (7) and the optical fibre (8) is a stair-like function (C, C') of the optical wavelength (λ) presenting a succession of regions (C1) with essentially constant respective group delay separated by respective transition regions (C2) of steeply increasing group delay.

9. An optical routing device (1), comprising an optical switch (3) in operative connection with an optical delay line (4) according to any one of claims 2 to 8.
